# EUROPÄISCHE PATENTANMELDUNG

(11) **EP 1 892 653 A1**
(43) Veröffentlichungstag der Anmeldung: **27.02.2008**
(21) Anmeldenummer: 06017816.7
(22) Anmeldetag: 25.08.2006
(51) Int. Cl.: G06Q 10/00

(54) **Verfahren und Kommunikationsserver zur Ausgabe einer elektronischen Nachricht**

(71) Anmelder: SIEMENS AKTIENGESELLSCHAFT, 80333 München (DE)
(72) Erfinder: Niederste-Hollenberg, Torsten, 52066 Aachen (DE)

(57) **Zusammenfassung**

Die Erfindung betrifft ein Verfahren und einen Kommunikationsserver zur Ausgabe einer elektronischen Nachricht (N1, N2, N3), wobei für eine Mehrzahl elektronischer Nachrichten (N1, N2, N3) eine Ausgabe-Reihenfolge festgelegt wird, und wobei zumindest die erste elektronische Nachricht (N1, N2, N3) der festgelegten Ausgabe-Reihenfolge ausgegeben wird. Dabei wird in einem ersten Schritt einer Mehrzahl Schlüsselworte jeweils ein Prioritätswert zugeordnet, in einem zweiten Schritt werden die elektronischen Nachrichten (N1, N2, N3) jeweils geöffnet, in einem dritten Schritt wird der Inhalt der geöffneten elektronischen Nachrichten (N1, N2, N3) jeweils hinsichtlich der Schlüsselworte durchsucht, in einem vierten Schritt wird anhand der aufgefundenen Schlüsselworte den elektronischen Nachrichten (N1, N2, N3) jeweils zumindest ein Prioritätswert zugeordnet, und in einem fünften Schritt wird die Ausgabe-Reihenfolge der elektronischen Nachrichten (N1, N2, N3) anhand der jeweils zugeordneten Prioritätswerte festgelegt.

## Beschreibung

Die Erfindung betrifft ein Verfahren zur Ausgabe einer elektronischen Nachricht gemäß dem Oberbegriff des Patentanspruchs 1 und einen Kommunikationsserver zur Durchführung des Verfahrens gemäß Patentanspruch 11.

Für Kommunikationszwecke werden elektronische Nachrichten verschiedener Art verwendet, beispielsweise E-Mail-Nachrichten, Telefax-Nachrichten oder auch Kurznachrichten (SMS = "Short Message Service"). Im Gegensatz zu den sog. "Echtzeitnachrichten" wie Telefongesprächen oder Video-Konferenzen ("Streams") werden die hier betrachteten elektronischen Nachrichten regelmäßig in einem elektronischen Posteingangsfach "Mailbox", also in einer Speichervorrichtung für einen Benutzer gespeichert und zu einem späteren Zeitpunkt abgerufen und zur Kenntnis genommen.

Als Speichervorrichtung werden zumeist dafür eingerichtete Computer, sog. Kommunikationsserver, verwendet. Für E-Mail-Nachrichten werden dementsprechend E-Mail-Server (z.B. der "Exchange"-Server der Fa. Microsoft) verwendet, für Sprachnachrichten sog. "Voice-Mail-Server", entsprechend für Telefax-Nachrichten sog. "Fax-Server" etc.. Auch die in Mobilfunknetzen gebräuchlichen Kurznachrichten (SMS-Nachrichten) werden entweder mittels eines Kommunikationsservers des jeweiligen Mobilfunknetz-Betreibers oder in einem Speicherbaustein bzw. der SIM-Karte eines Mobiltelefons gespeichert. Eine besondere Ausführungsform der Kommunikationsserver sind die sog. "Unified-Messaging-Server" ("UMS-Server"), die elektronische Nachrichten verschiedener Dienste (meist Voice-Mail, Telefax und E-Mail) mittels einer einzigen Benutzeroberfläche verwalten und in einer gemeinsamen Speichervorrichtung zum Abruf bereithalten. Die Benutzeroberflächen der Kommunikationsserver, insbesondere der UMS-Server, werden meist durch ein Computerprogramm gebildet, welches auf einem Personal-Computer abläuft und über Tastatur - bzw. Mauseingaben, bedient wird. Alternativ oder zusätzlich bieten viele Kommunikationsserver Benutzeroberflächen, welche sich über ein Fernsprechgerät bedienen lassen (sog. "TUI" = Telphony-User-Interface) oder aber auch Benutzeroberflächen, welche über ein sog. Web-Interface- oder WAP-Interface (WAP = Wireless Application Protocol) über das Internet oder über ein beliebiges Mobiltelefon oder eine ähnliche technische Einrichtung von einem beliebigen Ort aus bedienen lässt.

Bei der Benutzung von Kommunikationsservern hat sich als problematisch herausgestellt, dass die von einem Benutzer zur gleichen Zeit erfassbare Anzahl elektronischer Nachrichten beschränkt ist. Insbesondere bei den UMS-Systemen, bei denen elektronische Nachrichten verschiedener Kommunikationsmittel (Dienste) zusammenfließen, sind Benutzer oft mit einer unübersichtlichen Informationsmenge konfrontiert, besonders in den Fällen, in denen die Nachrichten nur sporadisch von dem System abgerufen werden. Während sich mit grafischen Benutzeroberflächen - je nach Bildschirmgröße - zumindest einige elektronische Nachrichten zeitgleich darstellen lassen, erlauben andere Benutzeroberflächen, beispielsweise der telefonische Zugriff über das bereits erwähnte TUI, nur sequentiellen Zugriff auf die elektronischen Nachrichten ("vorlesen"), so dass einem Benutzer oft nichts anderes übrig bleibt, als alle elektronischen Nachrichten nacheinander abzuhören bzw. einzusehen.

Zur Verbesserung des Bedienkomforts bieten beispielsweise die grafischen Benutzeroberflächen von E-Mail-Servern die Möglichkeit, die von einem Absender als "wichtig" markierten elektronischen Nachrichten besonders hervorzuheben. Weiter bieten solche Systeme die Möglichkeit, Nachrichten nach Kriterien wie "Absender", "Größe" oder alphabetisch nach dem Inhalt der Betreffzeilen ("subject") zu sortieren. Üblicherweise sind Kommunikationsserver so voreingestellt, dass zuletzt eingegangene Nachrichten zuerst ausgegeben werden. Dabei ist aber nicht sichergestellt, dass die wichtigste Nachricht zuerst ausgegeben wird; insbesondere in den Fällen, in denen ein Benutzer nur eine oder wenige Nachrichten abhören kann. Beispielsweise können in einer kurzen Arbeitspause mittels telefonischem Zugriff auf eine Mailbox anstelle wichtiger Nachrichten zunächst Unwichtige ausgegeben werden, was von erheblichem Nachteil sein kann.

Verschiedene Kommunikationsserver bieten die Möglichkeit, eingegangene elektronische Nachrichten mittels einer sog. Benachrichtigungs-Meldung auszugeben oder zumindest zu signalisieren. Dieses Vorgehen wird auch als "User-Outcall" bezeichnet. So kann beispielsweise ein Unified-Messaging-System oder ein Voice-Mail-Server derart voreingestellt werden, dass immer dann, wenn eine neue elektronische Nachricht vorliegt, eine SMS-Nachricht mit den Absenderangaben oder einer Betreffzeile der elektronischen Nachricht an ein Mobiltelefon des Benutzers versendet wird. Analog dazu können auch E-Mail-Nachrichten an ein weiteres E-Mail-Postfach des Benutzers versendet werden, etc.. Da ein solches Vorgehen insbesondere bei Benutzern, die viele elektronische Nachrichten erhalten, zu ungewünschten Störungen führen kann, lassen sich solche "User-Outcall"-Einrichtungen mit sog. "Filtern" programmieren, so dass beispielsweise nur elektronische Nachrichten bestimmter Absender oder mit einer bestimmten "Wichtig"-Kennzeichnung gemeldet werden. Dabei besteht aber die Gefahr, dass wichtige Nachrichten, die nicht diesen Kriterien entsprechen, auch nicht ausgegeben bzw. gemeldet werden, denn eine "Wichtig"-Kennzeichnung muss von dem Absender der Nachricht eingegeben werden. Dies wird i.a. aber unzuverlässig gehandhabt.

Es ist also eine Aufgabe der vorliegenden Erfindung, die Priorisierung bei der Ausgabe elektronischer Nachrichten zu verbessern und den Zugriff auf elektronische Nachrichten übersichtlicher zu gestalten.

Die Aufgabe wird durch ein Verfahren gemäß dem Patentanspruch 1 und durch einen Kommunikationsserver gemäß dem Patentanspruch 11 gelöst.

Das Verfahren zur Lösung der Aufgabe sieht vor, dass zur Ausgabe einer elektronischen Nachricht zunächst für eine Mehrzahl elektronischer Nachrichten eine Ausgabe-Reihenfolge festgelegt wird, wobei zumindest die erste elektronische Nachricht der festgelegten Ausgabe-Reihenfolge ausgegeben wird. Dazu wird in einem ersten Schritt durch einen Benutzer einer Mehrzahl Schlüsselworte jeweils ein Prioritätswert zugeordnet, in einem zweiten Schritt werden die elektronischen Nachrichten jeweils geöffnet, in einem dritten Schritt wird der Inhalt der geöffneten elektronischen Nachrichten jeweils hinsichtlich der Schlüsselworte durchsucht, in einem vierten Schritt wird anhand der aufgefundenen Schlüsselworte den elektronischen Nachrichten jeweils automatisch ein Prioritätswert zugeordnet, und schließlich wird in einem fünften Schritt die Ausgabe-Reihenfolge der elektronischen Nachrichten anhand der jeweiligen Prioritätswerte festgelegt. Durch dieses Verfahren wird sichergestellt, dass gemäß den speziellen Anforderungen des Benutzers die elektronische Nachricht mit der höchsten Wichtigkeit zuerst ausgeben wird. Das ist insbesondere dann von Vorteil, wenn nur eine Nachricht ausgegeben oder angezeigt werden kann. Durch die Analyse der Nachrichten hinsichtlich definierter Schlüsselworte können Nachrichten auch dann priorisiert verarbeitet werden, wenn eine Betreffangabe oder eine Absenderabgabe allein dazu nicht geeignet ist oder vom Absender keine entsprechende Kennzeichnung eingegeben wurde.

Zur Lösung der Aufgabe wird weiter ein Kommunikationsserver zur Durchführung des Verfahrens vorgeschlagen, der gekennzeichnet ist durch eine Empfangseinrichtung zum Empfang elektronischer Nachrichten, eine Speichereinrichtung zur Speicherung der elektronischen Nachrichten, eine Komponente zum Öffnen der empfangenen elektronischen Nachrichten, eine Speichereinheit zur Speicherung von Schlüsselworten und denen zugeordneten Prioritätswerten, eine Einrichtung zum Durchsuchen der geöffneten elektronischen Nachrichten hinsichtlich der gespeicherten Schlüsselworte und zur Zuordnung jeweils eines Prioritätswertes zu jeder der elektronischen Nachrichten anhand der den aufgefundenen Schlüsselworten zugeordneten Prioritätswerten, eine Einrichtung zur Festlegung der Ausgabe-Reihenfolge der elektronischen Nachrichten anhand der den elektronischen Nachrichten zugeordneten Prioritätswerte, und eine Einrichtung zur Ausgabe zumindest derjenigen elektronischen Nachricht mit dem höchsten Prioritätswert. Durch den Einsatz eines solchen Kommunikationsservers ist insbesondere bei eingeschränktem Zugriff auf einen Nachrichtenspeicher, beispielsweise bei der Benutzung einer telefonischen Benutzeroberfläche, ein schneller Zugriff auf die wichtigsten oder die wichtigste elektronische Nachricht sichergestellt. Die Priorisierung geschieht mit diesem Kommunikationsserver unabhängig von einer möglicherweise durch den Absender einer elektronischen Nachricht vorgegebenen Vorab-Priorisierung (beispielsweise ein "Wichtig"-Flag). Darüber hinaus ist der vorgeschlagene Kommunikationsserver in der Lage, zwischen wichtigen und unwichtigen elektronischen Nachrichten ein- und desselben Absenders zu unterscheiden, weil nicht (nur) eine Absenderadresse und ggf. Betreff-Zeile ("Subject") ausgewertet wird, sondern die geöffnete elektronische Nachricht möglichst vollständig hinsichtlich benutzerdefinierter Schlüsselworte untersucht wird, wobei die Schlüsselworte zusätzlich durch den Benutzer des Kommunikationsservers individuell mit einer Wertigkeit ausgestattet werden können. Dadurch ist der Kommunikationsserver vorteilhaft auf die individuellen Bedürfnisse einzelner Benutzer oder Benutzergruppen einstellbar.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für den vorgeschlagenen Kommunikationsserver.

Es ist von Vorteil, wenn die Prioritätswerte Benutzer-individuell oder gruppen-individuell den Schlüsselworten zugeordnet werden. Dadurch ist nämlich sichergestellt, dass nicht die elektronischen Nachrichten aller Benutzer gleich behandelt werden müssen, sondern durch jeden Benutzer individuell das Verhalten seiner "Mailbox" gesteuert werden kann. Durch eine Gruppen-individuelle Vergabe von Prioritätswerten kann die Administration eines erfindungsgemäßen Systems vorteilhaft vereinfacht werden, weil dann ein einziger Administrationsvorgang ausreicht, um Benutzerkonten mit identischen oder ähnlichen Anforderungen in einem solchen System zu konfigurieren.

Eine große Anzahl verschiedener elektronischer Nachrichten kann durch das Verfahren analysiert werden, wenn als die Schlüsselworte Kommunikationsadressen, Absender-Bezeichnungen, Zeitangaben oder unbestimmte Zeitbegriffe ausgewertet werden. Insbesondere unbestimmte Zeitbegriffe wie "dringend" oder "Notfall" sind dabei sehr gut geeignet, Nachrichten mit einer hohen Dringlichkeit entsprechend zu priorisieren. Gleiches gilt für Zeitangeben wie "heute" oder konkrete Zeit-/Datums-Angaben, die regelmäßig mit der aktuellen Uhrzeit in Bezug gesetzt werden können und somit einen "dynamischen" Prioritätswert repräsentieren.

In vielen Fällen ist die vollständige Ausgabe einer elektronischen Nachricht nicht notwendig, nicht gewünscht oder nicht möglich. So lassen sich beispielsweise Telefax-Nachrichten nicht oder nur äußerst schlecht telefonisch wiedergeben. In allen diesen Fällen bietet sich die Ausgabe der elektronischen Nachricht als Versand einer Benachrichtigungs-Meldung an; dies kann beispielsweise eine SMS-Benachrichtigung auf einem Mobiltelefon sein. Weiter kann das Verfahren vorteilhaft so ausgestaltet sein, dass die Ausgabe einer Benachrichtigungs-Meldung nur für solche der elektronischen Nachrichten vorgenommen wird, deren zugeordneter Prioritätswert einen zuvor durch einen (den) Benutzer definierten Schwellwert überschreitet. Als Alternative zu einer SMS-Benachrichtigung (Kurznachricht für ein mobiles Kommunikationsendgerät) kann als die Benachrichtigungs-Meldung vorteilhaft eine synthetisch erzeugte Sprachausgabe verwendet werden, die an zumindest einem zuvor definierten Kommunikationsendgerät ausgegeben wird. Ein solcher "User-Outcall" kann beispielsweise auch im Freisprechmodus von einem Autotelefon wiedergeben werden, so dass die Benutzeraktivität zum Empfang auf eine Minimum reduziert werden kann. Kombiniert mit einem (wie oben beschriebenen) Schwellwert für die Benachrichtigung kann Benutzer-individuell ein optimaler Kompromiss eingestellt werden, mit dem die Anzahl der Benachrichtigungs-Meldungen auf ein Minimum reduziert wird, aber dennoch keine wichtige elektronische Nachricht unterdrückt wird.

Das Verfahren kann vorteilhaft für elektronische Nachrichten jeglicher Art eingesetzt werden, beispielsweise Sprachnachrichten, E-Mail-Nachrichten, Telefax-Nachrichten oder Multimedia-Nachrichten. Die letztgenannten Multimedia-Nachrichten setzen sich aus mehreren Teilen zusammen, die unterschiedlichen Typs sind, beispielsweise Bewegtbilder, Ton (Audio) und Text. Vorteilhaft wird für den Audio-Anteil der Multimedia-Nachrichten und für Sprachnachrichten (Voice-Mail-Messages) in dem zweiten Schritt eine automatisierte Sprache-zu-Text-Umsetzung vorgenommen (sog. "Speech-to-Text").

Dem entsprechend werden vorteilhaft Telfax-Nachrichten und andere bildgebundene Nachrichten in dem zweiten Schritt mittels einer Einrichtung zur optischen Zeichenerfassung ("OCR" = Optical Character Recognition) in einem Zwischenschritt in eine Textnachricht oder - bei Vorhandensein von nichterkennbaren Bildanteilen - in eine Multimedia-Nachricht mit Text-Anteil umgesetzt, wodurch sich der Text-Anteil anschließend leicht hinsichtlich der Schlüsselworte analysieren lässt.

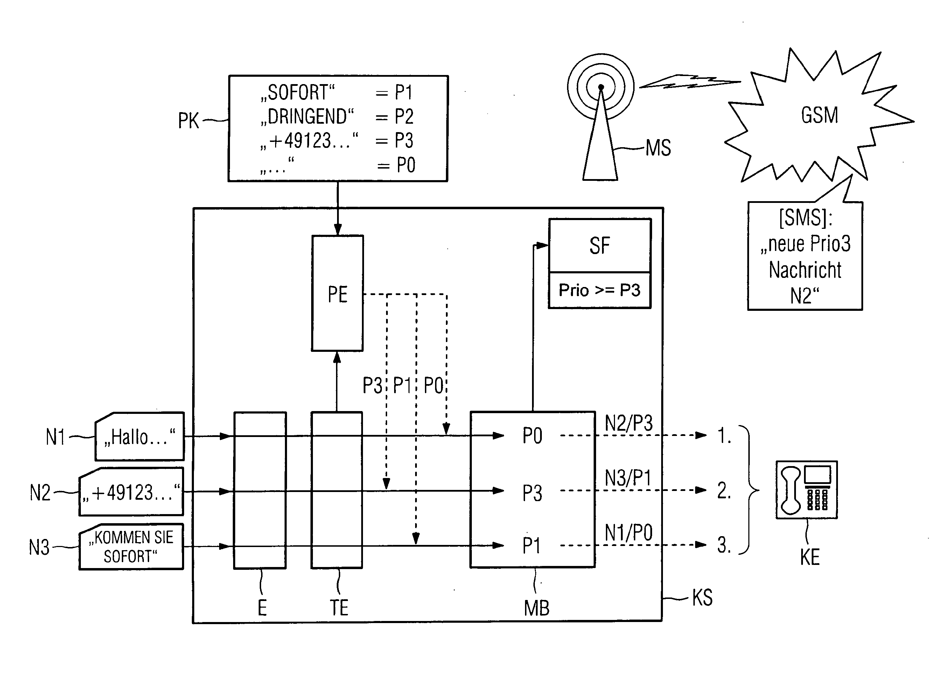

Ausführungsbeispiele des erfindungsgemäßen Verfahrens werden nachfolgend anhand der Zeichnung erläutert. Sie dienen gleichzeitig der Erläuterung eines erfindungsgemäßen Kommunikationsservers.

Dabei zeigt die einzige Figur in schematischer Darstellung einen Kommunikationsserver mit eingehenden elektronischen Nachrichten und ein an den Kommunikationsserver angebundenes Kommunikationsendgerät zum Zugriff auf die elektronischen Nachrichten.

In der Figur ist ein Kommunikationsserver KS mit einer Empfangseinrichtung E zum Empfang elektronischer Nachrichten N1, N2, N3, mit einer Text-Erkennungseinrichtung TE, mit einer Nachrichten-Speichereinrichtung MB ("Mail-Box"), einer Nachrichten-Bewertungseinrichtung PE ("Prio-Engine") und mit einer Sende-Filter-Einheit SF ausgestattet ist. Bei dem Kommunikationsserver KS handelt es sich im vorliegenden Ausführungsbeispiel um einen sog. "Unified-Messaging-Server", also um ein Gerät, welches Nachrichten verschiedenen Typs verwaltet, in einem generischen Datenformat speichert und mittels einer einheitlichen, homogenen Benutzeroberfläche zugreifbar macht. In der schematischen Darstellung sind nur die wichtigsten, für das beschriebene Verfahren notwendigen Funktionsblöcke des Kommunikationsservers KS dargestellt; selbstverständlich kann ein solcher Kommunikationsserver KS auch viele weitere Funktionsblöcke, Module und Einrichtungen umfassen, die aus dem Stand der Technik hinlänglich bekannt sind und deswegen an dieser Stelle nicht weiter beschrieben werden. Anstelle des hier gezeigten "Unified-Communication-Systems" kann das Verfahren auch in einem reinen E-Mail-Server, Telefax-Server oder in einem anderen Nachrichten-System angewendet werden.

Der Kommunikationsserver KS ist über eine Mobilfunk-Station MS an ein öffentliches Mobilfunknetz GSM angebunden; weiterhin ist der Kommunikationsserver KS über hier nicht dargestellte technische Einrichtungen mit einem öffentlichen Kommunikationsnetzwerk verbunden, beispielsweise ein ISDN-Netz und/oder das Internet. Über ein solches öffentliches Kommunikationsnetz lassen sich Kommunikationsverbindungen zwischen dem Kommunikationsserver KS und einem Kommunikationsendgerät KE (hier: ein Telefon) herstellen. Im vorliegenden Ausführungsbeispiel wird das Kommunikationsendgerät KE für den (telefonischen) Zugriff auf die Speichereinrichtung MB, also auf das Nachrichten-Postfach, genutzt. Es handelt sich hier also um eine telefonische Benutzeroberfläche, kurz: TUI. Selbstverständlich ist jedoch auch der Zugriff über hier nicht dargestellte graphische Benutzeroberflächen, beispielsweise per Web-Browser oder über ein E-Mail-Programm, möglich. Für das vorliegende Ausführungsbeispiel wurde jedoch das TUI ausgewählt, weil mittels einer telefonischen Benutzeroberfläche nur ein serieller Zugriff auf mehrere Nachrichten möglich ist. Hierbei ist das hier vorgestellte Verfahren besonders vorteilhaft einzusetzen.

Die Bewertungseinrichtung PE hat Zugriff auf einen (hier nicht dargestellten) Speicher, in dem für eine oder mehrere jeweils verwendete Sprachen Schlüsselworte wie "sofort", "dringend" etc. gespeichert sind bzw. speicherbar sind. Diesen Schlüsselworten können Prioritätswerte P0, P1, P2, P3 zugeordnet werden. In der Grundeinstellung des Kommunikationsservers KS sind bereits allgemein gebräuchliche Schlüsselworte und diesen zugeordnete Prioritätswerte P0, ..., P3 vorab eingespeichert ("Default-Einstellungen"). Selbstverständlich können benutzerseitig bestehende Schlüsselworte geändert bzw. mit einem geänderten Prioritätswert P0, ..., P3 versehen werden; selbstverständlich können auch benutzerdefinierte Schlüsselworte und Prioritätswerte hinzugefügt werden. Es ist außerdem möglich, die zugeordneten Prioritätswerte mit einer zeitlichen Bedingung zu verknüpfen, so dass beispielsweise das Schlüsselwort "dringend" Nachts, am Wochenende oder im Urlaub mit einem niedrigeren Prioritätswert versehen ist als wochentags zur üblichen Arbeitszeit. Weiter ist es möglich, für verschiedene Benutzergruppen eigene "Profile" mit einer jeweils eigenen Konfiguration PK ("Prioritäts-Konfiguration") vorzusehen. Im hier vorgestellten Ausführungsbeispiel sind vier verschiedene Prioritätswerte P0, ..., P3 dargestellt; selbstverständlich sind auch feinere Unterteilungen möglich, beispielsweise in Form von Werten zwischen 0% und 100%. Neben festen Schlüsselworten wie "sofort" oder "dringend" können auch den Kommunikationsadressen bekannter Personen bzw. Einrichtungen (Telefonnummern, Telefax-Nummern, E-Mail-Adressen etc.) jeweils Prioritätswerte zugeordnet werden. Weiter ist es möglich, aus der aktuellen Uhrzeit bzw. dem aktuellen Datum und einer entsprechenden Angabe in einer elektronischen Nachricht eine Differenzbildung vorzunehmen und je nach Größe dieser Differenz, also beispielsweise der verbleibenden Zeit bis zu einem in einer elektronischen Nachricht genannten Termin, ein Prioritätswert zu berechnen. Ein solcher Prioritätswert steigt regelmäßig mit fortschreitender Zeit, so dass ein solcher Prioritätswert auch als "dynamischer" Prioritätswert bezeichnet wird. Schließlich kann auch der Fall eintreten, in dem einer elektronischen Nachricht kein Schlüsselwort entnehmbar ist, wie bei der in der Figur exemplarisch dargestellten elektronischen Nachricht N1. Im vorliegenden Beispiel ist der Kommunikationsserver KS bzw. die Bewertungseinrichtung PE derart voreingestellt, dass eine solche elektronische Nachricht N1 den niedrigsten Prioritätswert P0 zugewiesen bekommt. Eine Verknüpfung verschiedener Prioritätswerte und Bedingungen mit Hilfe der bekannten "Fuzzy-Logic" kann in vielen Fällen eine bessere Priorisierung ergeben als die Verwendung eines linearen arithmetischen Regelwerks.

Editoren zur Bearbeitung der Schlüsselworte bzw. Prioritätswerte sind vorzugsweise mittels einer textbasierten oder grafischen Benutzeroberfläche bedienbar, beispielsweise über ein Web-Interface.

Im vorliegenden Ausführungsbeispiel sind die Bewertungseinrichtungen PE (mit der zugehörigen Speichereinrichtung für Schlüsselworte und Prioritätswerte) Bestandteil des Kommunikationsservers KS. Selbstverständlich können diese und andere Einrichtungen auch auf anderen Plattformen "ausgelagert" sein, wodurch die entsprechen Konfigurationen PK auch von mehreren Servern und Einrichtungen in einem Kommunikationsnetzwerk genutzt werden können.

Nachfolgend wird davon ausgegangen, dass der Kommunikationsserver KS in der Weise vorkonfiguriert ist, wie es in der Figur schematisch dargestellt ist.

Im Folgenden wird anhand der Figur der Eingang und die Weiterverarbeitung von drei elektronischen Nachrichten N1, N2, N3 erläutert. Bei der elektronischen Nachricht N1 handelt es sich um eine E-Mail-Nachricht, bei der Nachricht N2 um einen eingehenden Telefonanruf mit der Absender-Rufnummer "+49123..." und bei der Nachricht N3 um eine eingehende Telefax-Nachricht. Die elektronischen Nachrichten N2, N3 werden nicht von einem Benutzer bzw. Adressaten direkt entgegengenommen, sondern werden von dem Kommunikationsserver KS "aufgezeichnet". Der Eingang, die Datenkonvertierung und die Speicherung der elektronischen Nachrichten N1, N2, N3 geschieht im Kommunikationsserver KS grundsätzlich in analoger Weise zu bekannten Unified-Messaging-Systemen. Aus diesem Grund ist der Fokus der Erläuterungen im Folgenden auf die Besonderheiten gerichtet, die sich aus der Anwendung des erfindungsgemäßen Verfahrens ergeben.

Die eingehende elektronische Nachricht N1 ist, wie gesagt, eine E-Mail-Nachricht. Sie wird durch die Empfangseinrichtung E auch als eine solche identifiziert und an die Texterkennungseinrichtung TE weitergeleitet. Da die vorliegende E-Mail-Nachricht N1 bereits in einem weiterverarbeitbaren Textformat vorliegt, wird diese Nachricht N1 unverändert in die Speichereinrichtung MB verschoben. Ebenso wird eine Kopie der Nachricht N1 der Nachrichten-Bewertungseinrichtung PE zugeleitet, die sowohl die Betreffzeile als auch den Textkörper der Nachricht N1 nach dem Vorhandensein eines oder mehrerer der gespeicherten Schlüsselworte untersucht. Anstelle der Verwendung einer Kopie ist auch ein direkter, auch wiederholter, Zugriff der Bewertungseinrichtung PE auf die Speichereinrichtung MB möglich. Die im Ausführungsbeispiel vorausgesetzte elektronische Nachricht N1 enthält aber weder solche Schlüsselworte, noch andere verwertbare Zeitangaben. Aus diesem Grund wird der Nachricht N1 der Prioritätswert P0 (niedrigste Priorität) zugeordnet; dieser Prioritätswert wird in der Nachrichten-Speichereinrichtung MB der dort gespeicherten Nachricht N1 zugeordnet.

In analoger Weise wird die elektronische Nachricht N2 von der Empfangseinrichtung E empfangen. Die Nachricht N2 ist ein nicht angenommener Telefonanruf, besteht datentechnisch aus einer Angabe über den Absender, nämlich der übertragenen Rufnummer des Anrufers, und aus einem Audio-Datenstrom. Dieser Audio-Datenstrom wird durch die Empfangseinrichtung E in eine Audio-Datei umgesetzt, beispielsweise eine "WAV-Datei". Als nächstes wird die derart umgesetzte Nachricht N2 der Text-Erkennungseinrichtung TE zugeleitet, die anhand des Datenformats erkennt, dass anstelle des bei E-Mail-Nachrichten üblichen Textkörpers eine Audio-Datei vorliegt.

Die Text-Erkennungseinrichtung TE ist bei dem hier betrachteten Kommunikationsserver KS mit einer sog. "Speech-to-Text"-Einrichtung, also einer Konvertierungseinrichtung zur Konvertierung an Audiosignalen in Textdateien, ausgerüstet. Es kann aber in alternativen Ausführungsformen auch vorteilhaft sein, Audiodateien durch darauf spezialisierte externe Einrichtungen zu konvertieren, die beispielsweise als Dienst an einer zentralen Stelle in einem Netzwerk verfügbar sind. Die Erkennungseinrichtung TE konvertiert nun die Audiodatei und gibt sie zusammen mit einem weiteren Textfeld, nämlich dem Textfeld mit der Absender-Kommunikationsadresse (Rufnummer), sowohl an die Bewertungseinrichtung PE als auch zur Speicherung an die Speichereinrichtung MB. In der Bewertungseinrichtung PE wird festgestellt, dass die Absender-Kommunikationsadresse (Rufnummer "+49123...") mit dem Prioritätswert P3 assoziiert ist. Außerdem kommt in der Sprachdatei bzw. in der konvertierten Sprachdatei das Wort "sofort" vor (das ist in der Figur nicht dargestellt), welchem der - niedrigere - Prioritätswert P1 zugeordnet ist. Demzufolge wird der elektronischen Nachricht N2 der höhere der beiden Prioritätswerte, nämlich der Prioritätswert P3, zugeordnet, was in der Speichereinrichtung MB mit der elektronischen Nachricht N2 gespeichert wird. In zu der elektronischen Nachricht N2 analoger Weise wird auch die elektronische Nachricht N3, eine Telefaxnachricht, verarbeitet. Im Unterschied zu der elektronischen Nachricht N2 stellt jedoch die Text-Erkennungseinrichtung fest, dass anstelle einer Audiodatei jetzt eine Bilddatei (hier: ".TIF"-Datei) der Nachricht zugeordnet ist. Eine untergeordnete Einheit der Text-Erkennungseinrichtung TE führt deswegen eine optische Buchstabenerkennung in der bildhaften Telefax-Nachricht durch. Solche "OCR-Verfahren" (OCR = Optical Character Recognition) sind allgemein bekannt und auch als sog. "Dienste" in vielen Netzwerken verfügbar. In einer alternativen Ausführungsform des Kommunikationsservers KS kann daher der Bild-Anteil der Telefax-Nachricht N3 auch an einen entsprechenden Dienst im Kommunikationsnetzwerk zwecks Text-Konvertierung übersendet werden.

Die in Text konvertierte Telefax-Nachricht kann weiterhin Bildanteile enthalten, die nicht konvertierbar sind, beispielsweise Grafiken und Fotos. Aus diesem Grund wird die Telefax-Nachricht zusammen mit der Absender-Rufnummer in ihrer ursprünglichen Form in der Speichereinrichtung MB gespeichert. Der Nachrichten-Bewertungseinrichtung PE wird hingegen die konvertierte Telefax-Nachricht und das Textfeld mit der Absender-Rufnummer zur Auswertung zugeleitet. Auch in der hier exemplarisch betrachteten elektronischen Nachricht N3 wird durch die Nachrichten-Bewertungseinrichtung PE das Wort "sofort" erkannt, welches mit dem Prioritätswert P1 assoziiert ist. Dem entsprechend wird in der Speichereinrichtung MB der Nachricht N3 der Prioritätswert P1 zugeordnet.

Insbesondere bei der Verwendung einer dynamischen Priorisierung kann ein- und dieselbe Nachricht auch mehrfach neu bewertet werden; das trifft auch dann zu, wenn zwischenzeitlich die Konfiguration PK geändert wurde.

Die Sende-Filter-Einheit SF überwacht permanent den Inhalt der Speichereinrichtung MB; dies betrifft zumindest die neu eingegangenen und noch nicht abgerufenen bzw. gelesenen elektronischen Nachrichten N1, N2, N3. Die Sende-Filter-Einheit SF ist durch den Benutzer im Zuge der Konfigurierung der Bewertungseinrichtung PE ebenfalls konfiguriert worden, und zwar im vorliegenden Ausführungsbeispiel derart, dass für alle elektronischen Nachrichten mit einem zugeordneten Prioritätswert ≥ P3 eine entsprechende Mitteilung (Kurznachricht; SMS) zu einem Mobiltelefon versendet werden soll. Das Versenden der Kurznachricht geschieht über das Mobilfunksystem MS, welches über das Mobilfunknetz GSM Nachrichten versenden kann. Im vorliegenden Beispiel wird gemäß den Voreinstellungen die elektronische Nachricht N2 an das Mobilfunkgerät des Empfängers (Adressaten) der Nachricht N2 gemeldet.

Der Benutzer wählt sich mit einem Kommunikationsendgerät KE (alternativ auch mit seinem Mobiltelefon) in den Kommunikationsserver KS ein, wobei ihm ein akustisch geführter Dialog eingespielt wird. Per Tastendruck (MFV = Mehrfrequenz-Wahlverfahren) kann der Benutzer nun wählen, ob ihm alle Nachrichten in der Eingangs-Reihenfolge oder die noch nicht abgehörten Nachrichten in absteigender Reihenfolge ihres zugeordneten Prioritätswertes "vorgelesen" werden. Dabei werden textbasierte Nachrichten durch eine "Text-to-Speech"-Konvertierung in ein akustisches Format übersetzt. Für die Telefax-Nachricht N3 kann für eine solche Konvertierung vorteilhaft auf diejenigen Text-Version zurückgreifen, die durch die Text-Erkennungseinrichtung aus der Bilddatei gewonnen wurde. Bei der Auswahl der Betriebsweise "Ausgabe der Nachrichten in Prioritäts-Reihenfolge" gibt das System als erstes die Nachricht N2 aus, weil dies diejenige der noch nicht ausgegebenen Nachrichten N1, N2, N3 ist, welcher der höchste Prioritätswert P3 zugewiesen ist. Danach werden die Nachrichten N3 und schließlich N1 (niedrigste Priorität) ausgegeben.

## Patentansprüche

1. Verfahren zur Ausgabe einer elektronischen Nachricht (N1, N2, N3),
wobei für eine Mehrzahl elektronischer Nachrichten (N1, N2, N3) eine Ausgabe-Reihenfolge festgelegt wird, und
wobei zumindest die erste elektronische Nachricht (N1, N2, N3) der festgelegten Ausgabe-Reihenfolge ausgegeben wird,
**dadurch gekennzeichnet, dass**
in einem ersten Schritt einer Mehrzahl Schlüsselworte jeweils ein Prioritätswert zugeordnet wird,
in einem zweiten Schritt die elektronischen Nachrichten (N1, N2, N3) jeweils geöffnet werden,
in einem dritten Schritt der Inhalt der geöffneten elektronischen Nachrichten (N1, N2, N3) jeweils hinsichtlich der Schlüsselworte durchsucht wird,
in einem vierten Schritt anhand der aufgefundenen Schlüsselworte den elektronischen Nachrichten (N1, N2, N3) jeweils zumindest ein Prioritätswert zugeordnet wird, und
in einem fünften Schritt die Ausgabe-Reihenfolge der elektronischen Nachrichten (N1, N2, N3) anhand der jeweils zugeordneten Prioritätswerte festgelegt wird.

2. Verfahren nach Patentanspruch 1,
**dadurch gekennzeichnet, dass**
die Prioritätswerte Benutzer-individuell oder gruppen-individuell den Schlüsselworten zugeordnet werden.

3. Verfahren nach einem der vorhergehenden Patentansprüche,
**dadurch gekennzeichnet, dass**
als die Schlüsselworte Kommunikationsadressen, Absender-Bezeichnungen, Zeitangaben oder unbestimmte Zeitbegriffe verwendet werden.

4. Verfahren nach einem der vorhergehenden Patentansprüche,
**dadurch gekennzeichnet, dass**
die Ausgabe der elektronischen Nachricht (N1, N2, N3) durch den Versand einer Benachrichtigungs-Meldung erfolgt.

5. Verfahren nach Patentanspruch 4,
**dadurch gekennzeichnet, dass**
die Ausgabe einer Benachrichtigungs-Meldung nur für solche der elektronischen Nachrichten (N1, N2, N3) vorgenommen wird, deren zugeordneter Prioritätswert einen zuvor durch einen Benutzer definierten Schwellwert überschreitet.

6. Verfahren nach einem der Patentansprüche 4 oder 5,
**dadurch gekennzeichnet, dass**
als die Benachrichtigungs-Meldung eine Kurznachricht für ein mobiles Kommunikationsendgerät verwendet wird.

7. Verfahren nach einem der Patentansprüche 4 oder 5,
**dadurch gekennzeichnet, dass**
als die Benachrichtigungs-Meldung eine synthetisch erzeugte Sprachausgabe verwendet wird, die an zumindest einem zuvor definierten Kommunikationsendgerät (KE) ausgegeben wird.

8. Verfahren nach einem der vorhergehenden Patentansprüche,
**dadurch gekennzeichnet, dass**
als elektronische Nachricht (N1, N2, N3) eine Sprachnachricht, eine E-Mail-Nachricht, eine Telefax-Nachricht oder eine Multimedia-Nachricht verwendet wird.

9. Verfahren nach Patentanspruch 8,
**dadurch gekennzeichnet, dass**
im Fall der Verwendung einer Sprachnachricht in dem zweiten Schritt eine automatisierte Sprache-zu-Text-Umsetzung der elektronischen Nachricht (N1, N2, N3) vorgenommen wird.

10. Verfahren nach Patentanspruch 8,
**dadurch gekennzeichnet, dass**
im Fall der Verwendung einer Telefax-Nachricht in dem zweiten Schritt die Telefax-Nachricht mittels einer Einrichtung zur optischen Zeichenerfassung in eine Textnachricht oder in eine Multimedia-Nachricht mit Text-Anteil umgesetzt wird.

11. Kommunikationsserver (KS) zur Durchführung eines der vorgenannten Verfahren,
**gekennzeichnet durch**
eine Empfangseinrichtung (E)zum Empfang elektronischer Nachrichten (N1, N2, N3),
eine Speichereinrichtung (MB) zur Speicherung der elektronischen Nachrichten (N1, N2, N3),
eine Komponente zum Öffnen der empfangenen elektronischen Nachrichten (N1, N2, N3),
eine Speichereinheit zur Speicherung von Schlüsselworten und denen zugeordneten Prioritätswerten,
eine Einrichtung (PE) zum Durchsuchen der geöffneten elektronischen Nachrichten (N1, N2, N3) hinsichtlich der gespeicherten Schlüsselworte und zur Zuordnung jeweils eines Prioritätswertes zu jeder der elektronischen Nachrichten (N1, N2, N3) anhand der den aufgefundenen Schlüsselworten zugeordneten Prioritätswerten, eine Einrichtung zur Festlegung der Ausgabe-Reihenfolge der elektronischen Nachrichten (N1, N2, N3) anhand der den elektronischen Nachrichten (N1, N2, N3) zugeordneten Prioritätswerte, und
eine Einrichtung zur Ausgabe zumindest derjenigen elektronischen Nachricht (N1, N2, N3) mit dem höchsten Prioritätswert.
